# FASCICULE DE BREVET EUROPEEN

(11) **EP 1 773 665 B1**
(45) Date de publication et mention de la délivrance du brevet: **13.02.2008**
(21) Numéro de dépôt: 05791087.9
(22) Date de dépôt: 18.07.2005
(51) Int. Cl.: B64D 45/00

(54) **PORTE RENFORCEE**
VERSTÄRKTE TÜR
REINFORCED DOOR

(30) Priorité: 03.08.2004 FR 0408580; 02.09.2004 US 606529 P
(43) Date de publication de la demande: 18.04.2007
(73) Titulaire: Airbus, 31700 Blagnac Cédex (FR); Airbus Deutschland GmbH, 21129 Hamburg (DE)
(72) Inventeur: FRENCH, Clive, Nottingham NG54NX (GB); MAKSEN, Smail, F-31330 Grenade (FR)
(74) Mandataire: Hartmann, Jean-Luc
(86) Numéro de dépôt international: PCT/FR2005/001823
(87) Numéro de publication internationale: WO 2006/024727

(56) Documents cités:
- WO-A-03/106796
- FR-A- 2 848 179
- GB-A- 2 381 551

## Description

La présente invention concerne une porte intérieure de sécurité pour un aéronef.

Suite aux attentats du 11 septembre 2001, des mesures ont été prises pour augmenter la sécurité des cockpits d'aéronef. Ces mesures ont notamment porté sur la porte séparant le cockpit d'un aéronef de sa cabine. D'après de nouvelles normes, cette porte doit former une barrière empêchant toute intrusion dans le cockpit et l'entrée dans le cockpit doit être maintenant limitée uniquement au personnel navigant.

Comme par le passé, ces portes de cockpit doivent toutefois s'ouvrir automatiquement lorsqu'une dépression apparaît, soit du côté de la cabine soit du côté du cockpit.

L'objet de la présente invention est d'augmenter la sécurité à bord d'un aéronef en rendant encore plus difficile l'accès au cockpit pour un intrus.

Il a été remarqué que malgré la présence de systèmes de sécurité pour empêcher l'ouverture d'une porte, celle-ci est ouverte pour laisser le passage par exemple au pilote ou au copilote et un intrus peut mettre à profit cette ouverture pour s'infiltrer dans le cockpit car les dispositifs de sécurité sont alors inopérants. Un point faible des portes de cockpit actuelles est donc que celles-ci sont parfois ouvertes durant un vol, notamment un vol long courrier. Une idée originale à la base de l'invention est d'empêcher les passagers auxquels l'accès au cockpit est interdit de savoir quand la porte de cockpit est ouverte.

Dans certains aéronefs, la porte de cockpit se trouve au fond d'un couloir qui dessert un espace destiné essentiellement au personnel naviguant et dans lequel se trouvent généralement des toilettes. Certaines compagnies aériennes acceptent que ces toilettes soient utilisées par des passagers.

L'idée à l'origine de la présente invention est de fermer ce couloir par une seconde porte du côté de la cabine. Cette seconde porte a pour but principal d'être une barrière visuelle empêchant les passagers de distinguer si la porte de cockpit est ouverte ou fermée.

Une solution consiste à disposer un rideau à l'extrémité du couloir opposé à la porte de cockpit. Cette solution peut convenir mais il est clair qu'elle n'est pas dissuasive vis-à-vis d'un agresseur.

L'invention vise alors à fournir une barrière rigide, se présentant sous la forme d'une porte, pour fermer le couloir se trouvant derrière la porte de cockpit mais pouvant également être utilisée à d'autres endroits à bord d'un aéronef.

Il convient qu'en cas de dépression, d'un côté ou de l'autre de cette porte, celle-ci reste d'un seul tenant. En effet si elle se casse en plusieurs morceaux, ces morceaux forment alors des projectiles dangereux pour les personnes se trouvant à bord de l'aéronef. Cette porte sera avantageusement légère. En effet, comme tous les composants embarqués à bord d'un aéronef, on cherche à limiter la masse embarquée. Enfin, lorsque cette porte est utilisée pour fermer le couloir derrière le cockpit, cette porte formera avantageusement également une barrière difficile à franchir pour un agresseur.

A cet effet, elle propose une porte renforcée destinée à un aéronef et comportant des éléments formant une structure interne.

Selon l'invention, la structure interne est renforcée par un réseau de sangles reliant la plupart des éléments formant la structure interne.

Ce réseau de sangles permet tout d'abord de renforcer la structure de la porte. Ce renfort permet de diminuer sensiblement le poids de la porte à résistance mécanique équivalente par rapport à une construction traditionnelle d'une porte. Ensuite, en cas de rupture au niveau du châssis, les sangles permettent de retenir les parties cassées de la porte et assurent ainsi la cohésion de la porte. Enfin, en cas d'agression, les sangles forment une barrière supplémentaire que l'agresseur doit franchir.

Dans une forme de réalisation préférée, les sangles se présentent sous la forme de rubans collés sur la structure interne. Cette solution est facile à mettre en oeuvre et permet de bien solidariser le réseau de sangles à la structure interne.

Les sangles sont avantageusement réalisées à base de fibres composites à haute résistance, par exemple des fibres de carbone. Ce matériau a l'avantage d'une part de présenter d'excellentes caractéristiques mécaniques et d'autre part d'être léger.

Pour augmenter l'efficacité du réseau en ce qui concerne notamment la cohésion de la porte et la barrière formée à l'encontre d'un agresseur, les sangles sont de préférence disposées sur la structure interne et reliées entre elles de manière à former un filet.

Dans une forme de réalisation, la porte renforcée selon l'invention est telle que sa structure interne comporte au moins trois montants verticaux reliés par des pièces de liaison disposés horizontalement. Dans cette forme de réalisation, les sangles sont disposées sur toute leur longueur le long des montants verticaux et des pièces de liaison horizontales. Ainsi, les sangles ne pénètrent pas dans les compartiments formés par les espaces laissés libres entre les montants et les pièces de liaison. Ces compartiments peuvent alors être équipés de panneaux "éjectables" sans que le réseau de sangles ne risque de venir perturber l'éjection des panneaux.

Des détails et avantages de la présente invention ressortiront mieux de la description qui suit, faite en référence au dessin schématique annexé, sur lequel :
La figure 1 est une vue de dessus en coupe partielle de la partie avant d'un aéronef,
La figure 2 est une vue de face d'une porte selon l'invention,
La figure 3 est une vue en coupe horizontale selon la ligne de coupe III-III de la figure 2, à échelle agrandie,
La figure 4 est une vue de détail d'un mécanisme de libération représenté sur la figure 3 en position verrouillée,
La figure 5 montre le mécanisme de la figure 4 en position déverrouillée,
Les figures 6 à 8 sont des vues correspondant à celle de la figure 3 lorsqu'une dépression apparaît dans le cockpit de l'aéronef,
La figure 9 est une vue en élévation de la structure portant la porte de la figure 2,
La figure 10 est une vue en coupe selon la ligne de coupe X-X de la figure 11,
La figure 11 est une vue de face correspondant à la figure 2 montrant un renfort de structure pouvant équiper la porte de la figure 2,
Les figures 12 et 13 sont des vues à échelle agrandie correspondant à la vue de la figure 3 et montrant un perfectionnement d'un panneau de porte selon l'invention, et
La figure 14 montre en vue de face un ensemble de deux panneaux tels ceux montrés sur les figures 12 et 13.

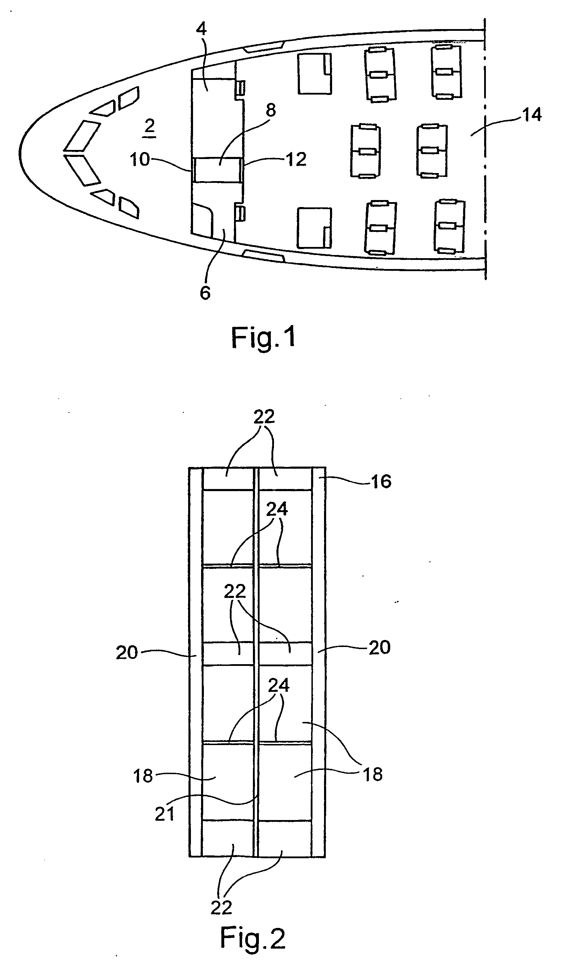

Sur la figure 1, on reconnaît un cockpit 2 d'un avion long courrier. Juste derrière le cockpit, se trouve un espace destiné plus particulièrement aux membres d'équipage. Cet espace comporte d'un côté une zone de repos 4 comportant par exemple des couchettes et d'un autre côté des sanitaires comportant par exemple des toilettes, un lavabo et une douche. Un couloir 8 est prévu entre la zone de repos 4 et les sanitaires 6 pour permettre d'accéder au cockpit 2. De manière classique, une porte 10 ferme le cockpit 2 et permet d'y accéder.

La porte de cockpit 10 ferme le couloir 8 à l'une de ses extrémités. De manière originale, il est proposé de disposer une seconde porte 12 à l'autre extrémité du couloir 8.

La seconde porte 12 a deux fonctions principales. Une première fonction est de cacher à la vue des passagers la porte de cockpit 10. Pour cette première fonction, cette seconde porte 12 peut prendre place à une position intermédiaire dans le couloir 8 ou bien à l'extrémité de ce couloir 8 opposée à la porte de cockpit 10. Une autre fonction de cette seconde porte est de donner un caractère privatif à la zone réservée aux membres de l'équipage. Pour cette seconde fonction, la seconde porte 12 se trouve de préférence à l'extrémité du couloir 8 opposée à la porte de cockpit 10, comme représenté sur la figure 1.

La porte de cockpit 10, pour des raisons de sécurité, est verrouillée pendant le vol et des moyens (code d'accès, badge, ...) sont prévus pour essayer d'empêcher l'accès au cockpit à toute personne non autorisée. Cette porte de cockpit 10 est également à l'épreuve des balles. Toutefois, lorsqu'une dépression apparaît dans la cabine 14 de l'aéronef, des moyens permettent l'ouverture automatique de cette porte de manière à équilibrer les pressions entre la cabine 14 et le cockpit 2 et éviter de trop solliciter la structure de l'avion.

La seconde porte 12 ne doit pas perturber le fonctionnement de la porte de cockpit 10, notamment lorsqu'une dépression apparaît dans le cockpit 2.

La figure 2 montre en vue de face une forme de réalisation préférée pour la réalisation de la seconde porte 12 représentée sur la figure 1. Cette porte comporte une structure interne appelée dans la suite de la description châssis 16. Huit panneaux 18 sont montés dans ce châssis 16.

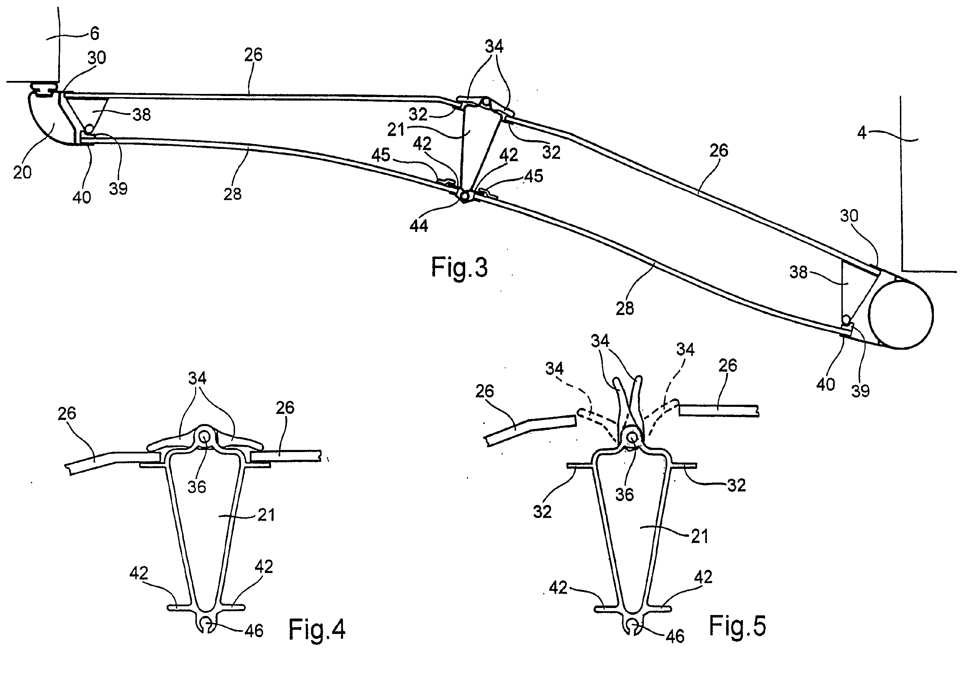

Le châssis 16 comporte deux montants latéraux 20 et un montant central 21 reliés par trois caissons de torsion 22, un caisson supérieur, un caisson médian et un caisson inférieur. De la sorte, entre les caissons supérieur et médian d'une part et les caissons médian et inférieur d'autre part le châssis présente deux ouvertures. Chacune de ces ouvertures est encore divisée à chaque fois à l'aide d'un croisillon 24 formant ainsi dans le châssis en tout huit compartiments recevant chacun un panneau 18. Ces huit compartiments sont répartis en deux colonnes de quatre. Chaque compartiment reçoit un panneau 18 montré plus en détail sur les figures 3 et 4.

Dans la suite, pour décrire la seconde porte 12, on considère que celle-ci est dans sa position fermée. On considère alors que la face avant de la porte est la face de cette porte qui est orientée vers le cockpit 2 et la face arrière de cette porte est celle qui est orientée vers la cabine 14, lorsque la seconde porte 12 est dans sa position fermée représentée sur les figures 1 et 3. Les adjectifs "intérieur" et "extérieur" se rapportent à la seconde porte 12.

Chaque panneau 18 comporte deux plaques : une plaque avant 26 et une plaque arrière 28.

La plaque avant 26 repose contre la face intérieure d'un premier rebord 30 solidaire d'un montant latéral 20 ainsi que sur la face extérieure d'un second rebord 32 du montant central 21. Les premier et second rebords 30 s'étendent par exemple sur toute la hauteur du compartiment recevant le panneau 18. Les bords supérieur et inférieur de la plaque avant 26 sont de préférence libres.

La plaque avant 26 est tenue sur le second rebord 32 à l'aide de loquets 34 pivotants. Chaque loquet 34 est monté sur un axe 36. Un ressort, non représenté, précontraint le loquet 34 en appui sur la face extérieure de la plaque avant 26 pour maintenir celle-ci en appui contre le second rebord 32. Un même axe 36 peut être utilisé pour maintenir les loquets 34 agissant sur les deux plaques avant 26 de panneaux de deux compartiments voisins.

Du côté du montant latéral 20, la plaque avant 26 est maintenue par une pièce d'espacement 38 comme indiqué ci-après. Le montant latéral 20 présente un troisième rebord 40 qui fait face au premier rebord 30. Le panneau arrière 28 vient en appui sur la face intérieure de ce troisième rebord 40. La pièce d'espacement 38 vient caler la plaque avant 26 et la plaque arrière 28 contre respectivement les premier et troisième rebords 30, 40. Une cale 39 est disposée entre la plaque arrière 28 et la pièce d'espacement 38. La forme de cette cale 39 est adaptée d'un côté à la forme -sensiblement plane- de la plaque arrière 28 et d'un autre côté à la forme de la pièce d'espacement 38.

La distance séparant les deux rebords 38 et 40 correspond ainsi à l'épaisseur de la plaque avant 26 ajoutée à l'épaisseur de la plaque arrière 28 et à la hauteur de l'ensemble formé par la pièce d'espacement 38 et la cale 39. La pièce d'espacement 38 présente par exemple la forme d'un étrier dont la base est fixée sur la face intérieure de la plaque avant 26. Les branches de cet étrier sont en appui sur cale 39 solidaire de la plaque arrière 38.

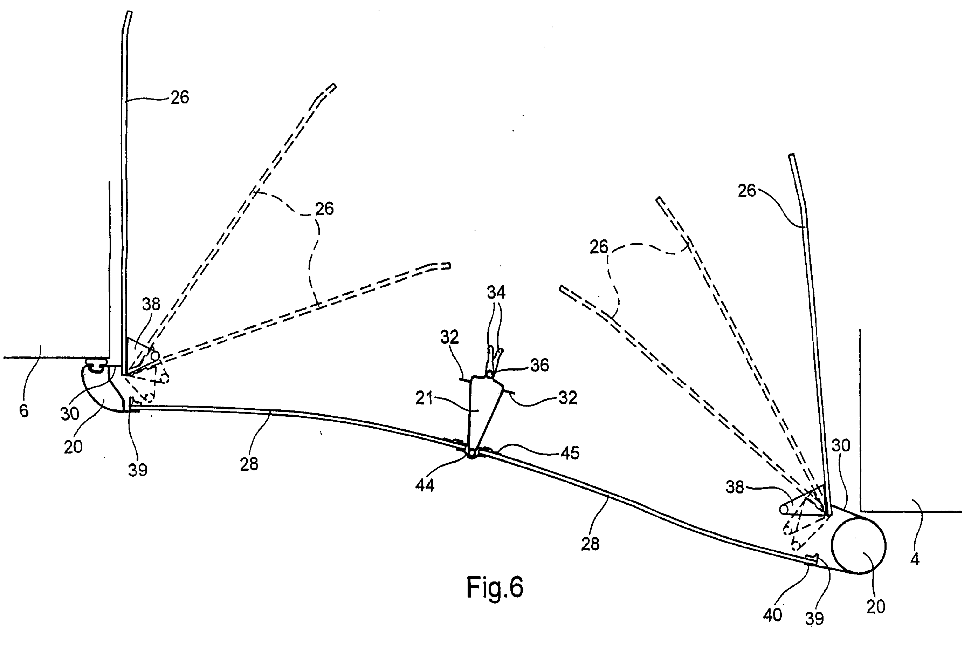

Il est décrit précédemment comment le bord vertical de la plaque arrière 28 est maintenu le long du montant latéral 20. Du côté du montant central 21, le bord de la plaque arrière 28 vient en appui contre un quatrième rebord 42, sur la face extérieure de celui-ci. Ce bord de la plaque arrière 28 est maintenu contre le quatrième rebord 42 à l'aide d'une barrette 44 venant s'encliqueter sur le montant central 21. On remarque sur les figures 4 et 5 un logement 46 utilisé pour l'encliquetage de la barrette 44 (visible sur la figure 3). On remarque aussi sur les figures 3 et 6 à 8 que les plaques arrière 28 sont équipées de doigts 45 permettant le maintien de ces plaques sur le rebord 42.

Les figures 5 à 8 illustrent le comportement des panneaux 18 lorsqu'une dépression apparaît à l'avant de l'avion, par exemple dans le cockpit 2, c'est-à-dire du côté de la face avant de la seconde porte 12.

Dans un tel cas, lorsque la seconde porte 12 est fermée, elle se trouve aspirée vers l'intérieur du couloir 8. Le châssis 16 de la seconde porte 12 est rigide et est prévu pour résister à une telle dépression. La seconde porte 12 est conçue de telle sorte que les panneaux 18 cèdent et soient aspirés à l'intérieur du couloir 8.

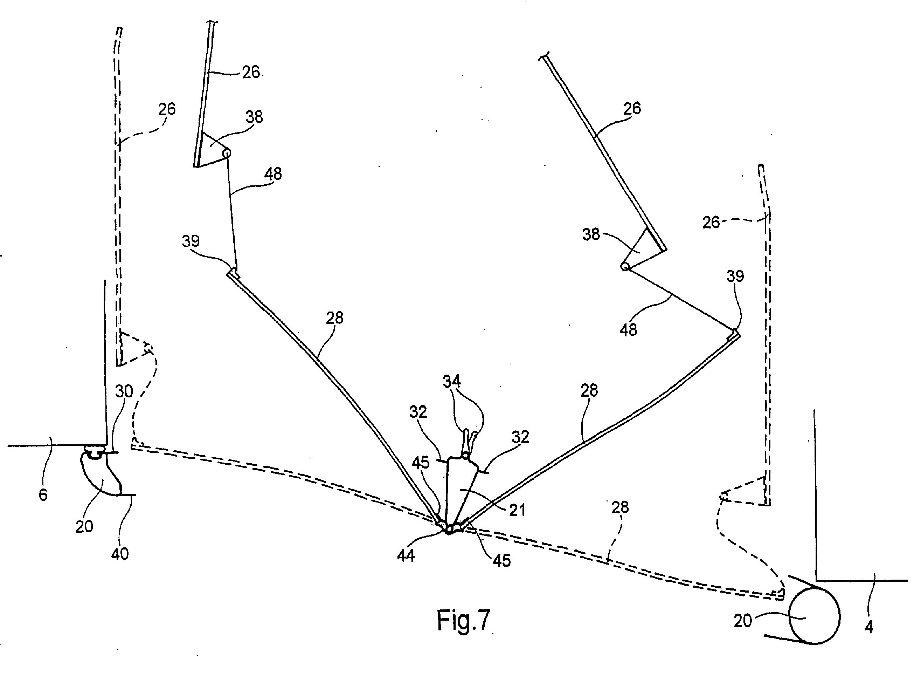

Dans un premier temps la plaque avant 26 de chaque panneau 18 est aspirée vers l'intérieur du couloir 8. Le premier rebord 30 est fixe. Par contre les loquets 34 correspondants sont pivotants. Lorsque la force exercée sur un loquet 34 est suffisante (chaque loquet 34 est précontraint par un ressort), le loquet 34 pivote et libère la plaque avant 26 du panneau 18. Cette plaque pivote alors autour du premier rebord 30 entraînant avec elle la pièce d'espacement 38. Cette dernière vient alors "rouler" sur la cale 39 dont la forme est adaptée pour faciliter le dégagement de la pièce d'espacement 38. Le bord de la plaque arrière 28 qui était en appui contre le troisième rebord 40 est alors libéré et la plaque arrière 28 commence à pivoter par rapport au quatrième rebord 42 (figure 7). Les doigts 45 permettent de contrôler ce mouvement pivotant en maintenant le bord de la plaque arrière 28 en appui sur le quatrième rebord 42. Un lien 48, qui est par exemple un câble, une sangle, une lanière ou similaire, relie la plaque avant 26 à la plaque arrière 28. Ce lien 48 est par exemple fixé sur la pièce d'espacement 38 d'un côté et sur la cale 39 de l'autre côté.

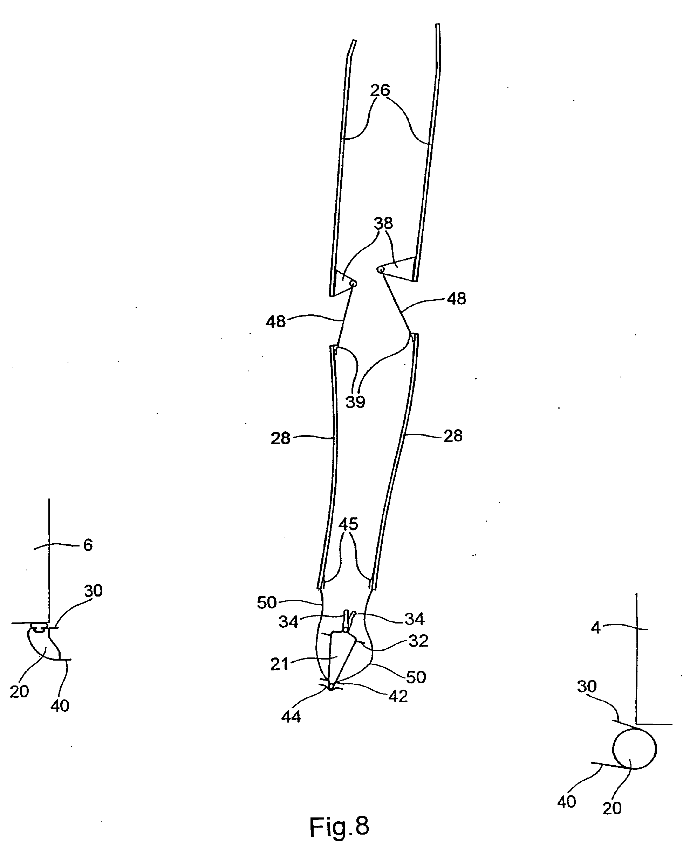

La figure 8 montre deux panneaux 18 entièrement ouverts. On remarque sur cette figure un second lien 50 (par exemple similaire au lien 48) qui relie la plaque arrière 28 de chaque panneau 18 au montant central 21. Les plaques 26 et 28 sont ainsi retenues et ne constituent pas des projectiles qui pourraient aller heurter (et tuer éventuellement) un membre de l'équipage.

Les huit panneaux 18 s'ouvrent simultanément. Ils sont en effet soumis à la même dépression et doivent donc réagir de façon similaire. Lorsque les panneaux sont entièrement ouverts (figure 8), seul le châssis 16 de la seconde porte 12 s'oppose au flux d'air d'arrière en avant lié à la dépression provoquée au niveau du cockpit 2. Ce châssis 16 présente peu de résistance à l'écoulement et la perte de charge correspondante est négligeable (de même que les contraintes induites sur la structure de l'avion). La seconde porte 12 décrite ci-dessus permet ainsi de ne pas perturber le fonctionnement de la porte de cockpit 10 en cas de dépression se produisant à l'avant de l'avion dans le cockpit 2.

On remarque de la description qui précède et des figures 3 à 8 correspondantes que le système proposé pour libérer les panneaux 18 est un système réarmable. En effet, les panneaux une fois sortis de leurs compartiments peuvent être remis en place sans problème. Il suffit de remettre tout d'abord la plaque arrière 28 dans son compartiment en position contre les rebords 42 et 40 puis de remettre en place la plaque avant 26 correspondante contre les rebords 30 et 32 avant de refaire pivoter les loquets 34, réarmant ainsi les ressorts correspondants (non représentés).

La force des ressorts agissant sur les loquets pivotants 34 est déterminée en fonction de la charge admissible sur la seconde porte 12. On peut estimer que la dépression maximale au niveau de cette seconde porte 12 se situe aux alentours de 150 hPa. Quand une telle dépression existe, les panneaux ont déjà été libérés. La force qui s'exerce alors sur la seconde porte 12 correspond à la surface du châssis multipliée par la pression exercée. Pour limiter les forces exercées sur la seconde porte 12, on peut supposer que cette force est la force maximale admissible. Si P_{décl} est la valeur de la dépression correspondant à la libération des panneaux 18, on prévoit que P_{décl} multipliée par la surface totale de la seconde porte 12 est inférieure à la force maximale s'exerçant sur la porte et précédemment calculée. Les ressorts agissant sur les loquets pivotants 34 sont alors réglés en fonction de la valeur P_{décl} choisie, de la surface du panneau 18 correspondant ainsi que du nombre de loquets pivotants 34 par panneau.

On remarque dans la description qui précède que les panneaux se libèrent du côté du montant central 21 et qu'une fois libérés, ces panneaux, du fait de la structure proposée, se retrouvent sensiblement au milieu du couloir 8. Ceci permet de tout d'abord regrouper les panneaux et d'éviter qu'il n'y en ait sur les deux bords du couloir. La principale raison de se regroupement des panneaux vers le centre du couloir 8 est toutefois ailleurs. Lorsqu'une dépression apparaît au niveau du cockpit 2, elle se propage vers le couloir 8. Du fait de la dépression, les modules, appelés aussi monuments, se trouvant de part et d'autre du couloir 8 ont tendance à se rapprocher l'un de l'autre, rétrécissant ainsi la largeur du couloir 8. Ces monuments peuvent alors se retrouver déformés à tel point qu'ils recouvrent les bords verticaux de la seconde porte 12. Si alors les panneaux 18 devaient se libérer au niveau des montants latéraux 20, cette libération pourrait être gênée, voire empêchée, par les monuments. La seconde porte 12 formerait alors une barrière empêchant l'équilibrage des pressions dans l'avion. Comme on l'a vu plus haut, ceci est bien entendu à éviter. Selon la position des monuments se trouvant dans le couloir 8 par rapport à la seconde porte, il faut donc éventuellement éviter de disposer les loquets (ou autres moyens de libération) sur les montants verticaux latéraux et plutôt les disposer vers le centre de la porte.

En cas de dépression au niveau de la cabine 14 de l'avion, il est possible par exemple de prévoir l'ouverture de la seconde porte 12. Cette ouverture provoquerait des charges dues à la force centrifuge induite par le mouvement de la porte sur les points d'attaches supérieurs et inférieurs de la porte sur l'avion.

Comme indiqué ci-dessus, la structure des panneaux 18 décrits permet par la libération successive des plaques avant puis arrière de permettre le passage de l'air dès qu'une dépression apparaît du côté du cockpit 2. Toutefois, la structure décrite est telle que lorsque l'on vient pousser sur les panneaux 18 depuis la cabine 14 vers le cockpit, c'est-à-dire de l'arrière vers l'avant, les panneaux résistent et ne se libèrent pas du châssis 16.

En effet, en se reportant à la figure 3, on remarque que chaque plaque arrière 28 est retenue par des éléments fixes tant que la plaque avant 26 correspondante est en place. On remarque sur la figure que d'un côté chaque plaque arrière 28 vient en appui contre un quatrième rebord 42 fixe et de l'autre côté est en appui, par l'intermédiaire d'une cale 39 et d'une pièce d'espacement 38 sur un premier rebord 30 fixe. Ainsi, si un effort est exercé de l'arrière vers l'avant sur une plaque arrière 28, cet effort est entièrement repris par les rebords 42 et 30. L'effort exercé ne vient pas agir sur les loquets pivotants susceptibles de libérer le panneau 18 correspondant.

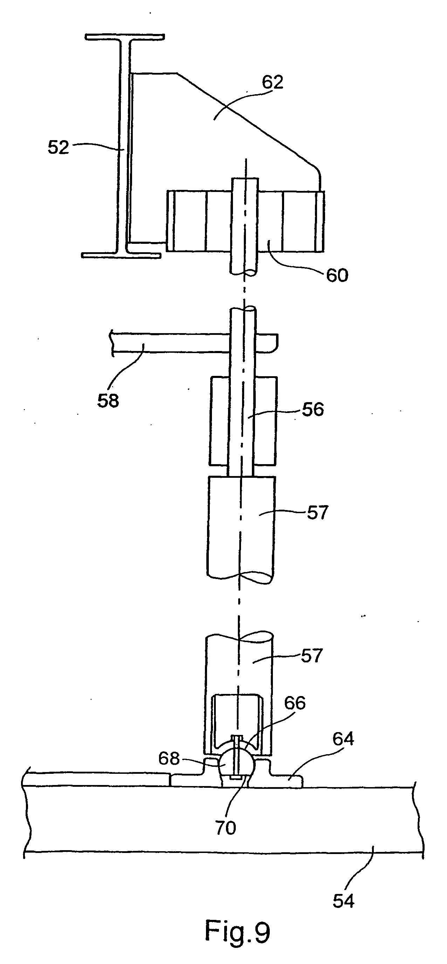

La figure 9 montre à titre d'exemple un montage possible de la porte sur la structure de l'avion. On reconnaît sur cette figure une poutre supérieure 52 et une poutre inférieure 54. On reconnaît également un axe autour duquel pivote la porte ainsi que le plafond 58 de la cabine 14 et du couloir 8. Cet axe est réalisé en deux parties : un tube 56 inférieur à l'intérieur duquel peut coulisser de manière télescopique un bras 57 cylindrique circulaire. Un système de verrouillage, par exemple un système à baïonnette est prévu pour verrouiller les pièces, notamment en translation, l'une par rapport à l'autre.

Le bras 57 forme la partie supérieure de l'axe 56 de la seconde porte 12. Il est monté pivotant dans un palier 60 fixé par une pièce en équerre 62 sur la poutre supérieure 52.

La partie inférieure de l'axe de porte, formée par le tube 56, est montée sur un palier auto-alignant. Ce palier comporte un support 64 fixé sur la poutre inférieure 54. Ce support 64 comporte un logement avec une portée sphérique 66. Une bille 68 dont le diamètre correspond à celui de la portée sphérique 66, présentant éventuellement un méplat 70, est fixée, par exemple par vissage, à l'extrémité inférieure du tube 56. Ce dernier présente, dans une forme de réalisation préférée, une portée sphérique pour recevoir la bille 68. Cette bille 68, lorsqu'elle prend place dans la portée sphérique 66 du support 64, permet l'alignement automatique de l'axe de porte lors du montage du support 64 sur le sol de l'aéronef, c'est-à-dire sur la poutre inférieure 54.

L'axe télescopique de la seconde porte 12 permet un montage et un démontage très faciles de cette porte. Pour réaliser le montage, le bras 57 est coulissé à l'intérieur du tube 56. Une fois le tube 56 en place sur la bille 68, l'axe de la porte est orienté pour se trouver sensiblement face au palier 60. Le bras 57 est alors sorti puis verrouillé dans sa position sortie. Le démontage se réalise facilement en réalisant les opérations de montage dans l'ordre inverse.

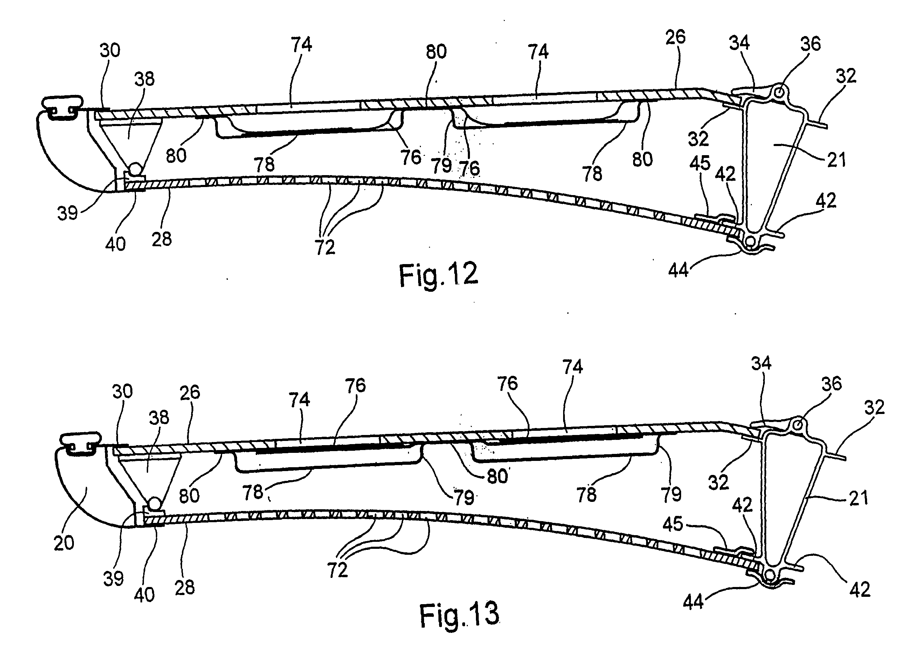

Les figures 12 à 14 montrent comment de l'air peut circuler de l'avant vers l'arrière de l'avion à travers la seconde porte 12. Ces figures montrent plus en détail la structure des plaques avant 26 et arrière 28 des panneaux 18.

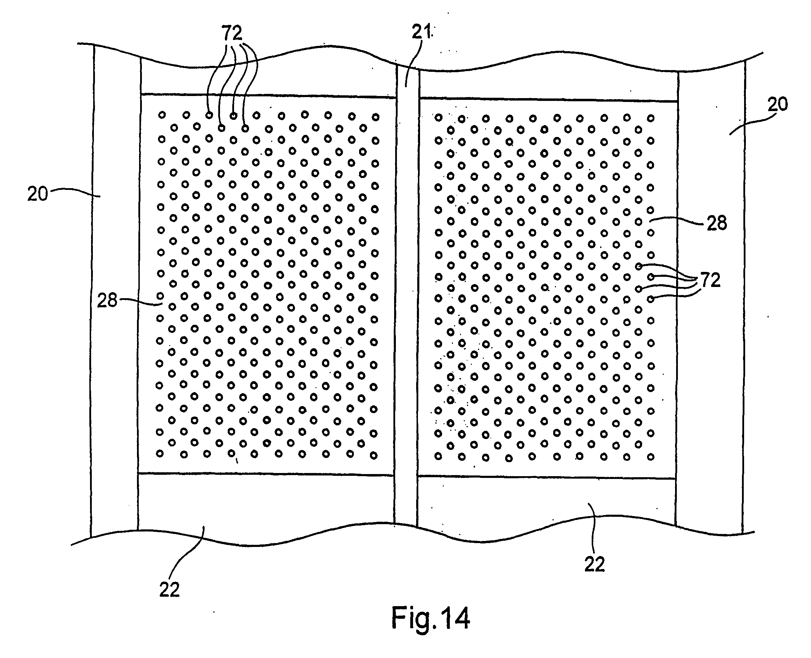

Pour permettre le passage de l'air, la plaque arrière 28 se présente, dans la forme de réalisation préférée représentée au dessin, sous la forme d'une grille comme le montre par exemple la figure 14. Des trous 72 sont régulièrement répartis sur toute la surface (sauf éventuellement près des bords) de la plaque arrière 28.

La plaque avant 26 est équipée quant à elle de valves anti-retour basse pression. On peut prévoir par exemple deux valves par panneau 18 comme suggéré sur les figures 12 et 13. Au niveau de chaque valve, une découpe 74 est réalisée dans la plaque avant 26. Chaque découpe 74 est recouverte entièrement par une membrane élastique 76 imperméable à l'air. Un couvercle 78 avec une jupe périphérique 79 et un rebord 80 vient recouvrir la membrane élastique 76. Ce couvercle 78 est fixé sur la face intérieure de la plaque avant 26, au niveau de son rebord 80. Le contour extérieur de la membrane élastique 76 est en partie pris en sandwich entre ce rebord 80 et la plaque intérieure 26. Si la membrane élastique 76 et le couvercle 78 par exemple sont rectangulaires, on peut prévoir par exemple que deux bords opposés de la membrane élastique 76 sont maintenus par le rebord 80 du couvercle 78 tandis que les deux autres bords de la membrane élastique 78 sont libres. Le couvercle 78 s'étend parallèlement à la plaque intérieure 26, à distance de celle-ci. Des ouvertures sont prévues dans ce couvercle, par exemple au niveau de la jupe périphérique 79, pour permettre le passage de l'air.

La figure 13 montre les valves anti-retour dans leur position fermée. Lorsqu'un flux d'air arrive de l'extérieur, c'est-à-dire un flux d'air se dirigeant de l'arrière vers l'avant de l'avion, il vient pousser la membrane élastique 76 sur la plaque avant 26 obstruant ainsi la découpe 74 correspondante. Par contre, comme montré sur la figure 12, lorsqu'un flux d'air arrive de l'intérieur, c'est-à-dire un flux d'air circulant de l'avant (couloir 8) vers l'arrière (cabine 14) de l'avion, la membrane élastique 76 est décollée de la face intérieure de plaque avant 26 et est poussée vers le couvercle 78. De l'air peut alors passer à travers la découpe 74, les bords libres de la membrane élastique 76, les ouvertures réalisées dans le couvercle 78 et ensuite par les trous 72 de la plaque arrière 28.

Ces valves anti-retour sont utilisées notamment pour permettre l'aération de la zone réservée aux membres de l'équipage et desservie par le couloir 8. Elles sont également utilisées lors de la fermeture de la seconde porte 12 pour éviter de mettre le couloir en surpression, ce qui gênerait notablement la fermeture de cette seconde porte 12. Ces valves peuvent également servir lorsqu'une dépression survient dans la cabine 14. De l'air peut alors passer du couloir 8 vers la cabine 14.

Il a été calculé que les variations de pression au niveau de la seconde porte 12 lors d'une dépression dans la cabine 14 étaient sensiblement moindres qu'au niveau de la porte de cockpit 10. En outre, cette différence de pression diminue rapidement, si bien que la seconde porte 12 peut rester fermée en cas de dépression dans la cabine 14 sans perturber le fonctionnement de la porte de cockpit 10.

La membrane élastique 76 est par exemple réalisée en polyuréthane. Pour collecter les charges électriques sources d'électricité statique lors de leur passage dans les valves anti-retours, on peut prévoir de sérigraphier un réseau, en cuivre par exemple, sur chacune des membranes élastiques 76, du côté de la fenêtre 74. Ce réseau est alors par exemple relié électriquement au lien 48 lui-même relié électriquement par l'intermédiaire de la plaque arrière 28 et du lien 50 au châssis 16 métallique de la seconde porte 12.

Dans une forme de réalisation préférée, il est également prévu de filtrer l'air passant par les valves anti-retours. Un filtre en mousse peut alors par exemple venir recouvrir le couvercle 78 de chaque valve. Il est également possible de prévoir un filtre sur la face intérieure (plutôt que sur la face extérieure) de la plaque arrière 28, filtre qui recouvre alors les trous 72 de cette plaque.

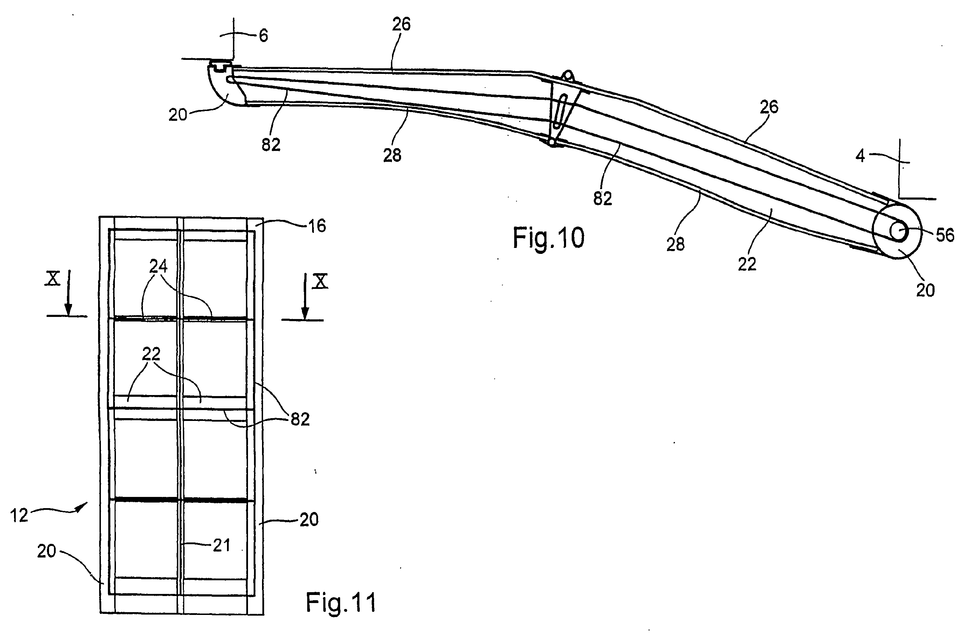

Les figures 10 et 11 représentent un système complémentaire permettant de renforcer la seconde porte 12. Ce système est constitué d'une armure 82 renforçant la structure du châssis 16. Cette armature 82 relie les principaux constituants du châssis pour les rendre encore plus solidaires les uns des autres. Cette armature 82 est constituée par exemple de sangles collées sur les éléments du châssis pour les relier. Ces sangles sont de préférence réalisées à partir de fibres de carbone. Elles sont disposées sur le châssis 16 de manière à former un réseau comparable à un filet. Ainsi, des liaisons sont prévues entre les différentes sangles. Ces dernières se présentent sous la forme de rubans disposés le long des montants 20, 21, des caissons de torsion 22 et des croisillons 24 pour ne pas gêner l'éjection des panneaux 18 en cas de dépression dans le cockpit.

L'armature 82 est de préférence réalisée à base de fibres de carbone. Ce matériau présente ici plusieurs avantages. Tout d'abord, sa résistance mécanique permet de renforcer la structure du châssis 16 de la seconde porte 12. Ensuite, des sangles réalisées dans ce matériau sont relativement légères et ne viennent donc pas alourdir la structure de la seconde porte 12. Des sangles en fibres de carbone sont également très difficiles à couper. Ainsi, en cas d'attaque, si une personne tente par la force de défoncer la seconde porte 12, l'armature 82 forme alors un filet très gênant pour l'assaillant. La présence de ce filet permet d'augmenter le temps nécessaire à cet assaillant pour franchir la seconde porte 12. Ce temps supplémentaire peut être précieux pour les membres de l'équipage qui, en cas d'attaque, peuvent aller se réfugier dans le cockpit 2 qui est sécurisé.

La seconde porte 12 décrite ci-dessus dans son mode de réalisation préféré permet de créer un espace privatif pour les membres de l'équipage et d'empêcher les passagers de voir la porte de cockpit. Cette seconde porte 12 isole aussi phoniquement l'espace privatif du personnel navigant grâce à sa structure à double cloison. L'espace libre entre les deux plaques de chaque panneau permet de réaliser une bonne isolation phonique.

La seconde porte 12 forme également une barrière retardant l'accès au cockpit d'un terroriste voulant prendre le contrôle de l'avion. Cette seconde porte ne perturbe pas le fonctionnement de la porte de cockpit en cas de dépression survenant à l'intérieur de la cabine de l'avion ou à l'intérieur de son cockpit.

Cette seconde porte 12, comme montré ci-dessus, peut être réalisée dans une structure légère -châssis de porte en alliage léger, panneaux composites, ... - et présente donc un surpoids acceptable dans un aéronef.

Bien entendu, une telle porte est équipée de moyens permettant de la retenir dans sa position fermée ainsi que dans sa position ouverte. Cette porte est aussi avantageusement munie de moyens de rappel vers sa position fermée. Ainsi, dès que la porte est dans une position intermédiaire entre sa position ouverte et sa position fermée, elle se referme automatiquement. De tels moyens sont connus de l'homme du métier et ne sont pas décrits ici. Il est possible également de prévoir, pour plus de sécurité, un code d'accès pour pouvoir ouvrir cette porte. D'autres moyens de reconnaissance (badge, etc...) peuvent également être prévus. Une telle porte peut également être équipée de moyens de surveillance permettant aux membres de l'équipage se trouvant d'un côté de la porte fermée de contrôler la cabine.

Lorsque la seconde porte est équipée de valves permettant le passage de l'air, on a vu que les plaques arrière 28 des panneaux 18 étaient perforées. Ces perforations peuvent être mises à profit pour l'esthétique de la porte. En effet, les plaques arrière 28 se trouvent du côté de la cabine de l'avion et sont vues des passagers. Il est par exemple possible de prévoir un moyen d'éclairage entre les deux plaques formant chaque panneau pour rétroéclairer les perforations de la plaque arrière. Ces perforations peuvent alors être disposées selon un motif particulier (dessin, logo de compagnie aérienne, lettres, etc...).

Comme il ressort de tout ce qui précède, la porte décrite ci-dessus peut répondre à de nombreux critères :
- en cas de dépression au niveau du cockpit, elle permet de réaliser un équilibrage des pressions,
- en cas de dépression au niveau de la cabine, elle permet également aux pressions de s'équilibrer,
- cette porte est conçue pour rester d'un seul tenant même en cas de très fortes sollicitations mécaniques,
- le poids de cette porte est relativement peu élevé,
- cette porte peut être équipée de moyens de fermeture classiques,
- des systèmes de surveillance (oeil espion, caméra, etc...) peuvent être prévus,
- cette porte peut éventuellement se fermer automatiquement,
- cette porte peut éventuellement se verrouiller automatiquement,
- cette porte permet de procurer au personnel navigant un espace privatif séparé du reste de la cabine,
- il est possible de réaliser esthétiquement une porte qui s'intègre avec le reste de la cabine.

La présente invention ne se limite pas à la forme de réalisation préférentielle décrite ci-dessus à titre d'exemple non limitatif. Elle concerne également toutes les variantes de réalisation à la portée de l'homme du métier dans le cadre des revendications ci-après.

## Revendications

1. Porte (12) renforcée destinée à un aéronef et comportant des éléments (20, 21, 22, 24) formant une structure interne (16), **caractérisée en ce que** la structure interne (16) est renforcée par un réseau (82) de sangles reliant la plupart des éléments formant la structure interne.

2. Porte (12) renforcée selon la revendication 1, **caractérisée en ce que** les sangles se présentent sous la forme de rubans collés sur la structure interne (16).

3. Porte (12) renforcée selon l'une des revendications 1 ou 2, **caractérisée en ce que** les sangles sont réalisées à base de fibres composites à haute résistance.

4. Porte (12) renforcée selon la revendication 3, **caractérisée en ce que** les sangles sont réalisées à base de fibres de carbone.

5. Porte (12) renforcée selon l'une des revendications 1 à 4, **caractérisée en ce que** les sangles sont disposées sur la structure interne (16) et reliées entre elles de manière à former un filet.

6. Porte renforcée selon l'une des revendications 1 à 5, **caractérisée en ce que** la structure interne (16) comporte au moins trois montants (20, 21) verticaux reliés par des pièces de liaison (22, 24) disposés horizontalement.

7. Porte renforcée selon la revendication 6, **caractérisée en ce que** les sangles sont disposées sur toute leur longueur le long des montants (20, 21) verticaux et des pièces de liaison horizontales (22, 24).

## Claims

1. Reinforced door (12) for an aircraft and comprising components (20, 21, 22, 24) that form an internal structure (16) **characterized in that** the internal structure (16) is reinforced by a network (82) of straps linking the majority of the components that form the internal structure.

2. Reinforced door (12) according to claim 1, **characterized in that** the straps take the form of tapes glued onto the internal structure (16).

3. Reinforced door (12) according to one of claims 1 or 2, **characterized in that** the straps are high strength composite fiber based.

4. Reinforced door (12) according to claim 3, **characterized in that** the straps are carbon fiber based.

5. Reinforced door (12) according to one of claims 1 to 4, **characterized in that** the straps are disposed on the internal structure (16) and linked together to form a net.

6. Reinforced door according to one of claims 1 to 5, **characterized in that** the internal structure (16) includes at least three vertical members (20, 21) linked by linkage pieces (22, 24) disposed horizontally.

7. Reinforced door according to claim 6, **characterized in that** the straps are disposed over their full length along the vertical members (20, 21) and the horizontal linkage pieces (22, 24).

## Patentansprüche

1. Verstärkte Tür (12), die für ein Flugzeug bestimmt ist und Elemente (20, 21, 22, 24) umfasst, die eine Innenstruktur (16) bilden, **dadurch gekennzeichnet, dass** die Innenstruktur (16) durch ein Netz (82) von Gurten verstärkt ist, die die Mehrzahl der die Innenstruktur bildenden Elemente verbinden.

2. Verstärkte Tür (12) nach Anspruch 1, **dadurch gekennzeichnet, dass** die Gurte in Form von Bändern vorliegen, die an der Innenstruktur (16) angeklebt sind.

3. Verstärkte Tür (12) nach einem der Ansprüche 1 oder 2, **dadurch gekennzeichnet, dass** die Gurte auf der Basis von Verbundfasern hoher Festigkeit hergestellt sind.

4. Verstärkte Tür (12) nach Anspruch 3, **dadurch gekennzeichnet, dass** die Gurte auf der Basis von Kohlenstofffasern hergestellt sind.

5. Verstärkte Tür (12) nach einem der Ansprüche 1 bis 4, **dadurch gekennzeichnet, dass** die Gurte auf der Innenstruktur (16) angeordnet sind und miteinander so verbunden sind, dass ein Netz gebildet wird.

6. Verstärkte Tür nach einem der Ansprüche 1 bis 5, **dadurch gekennzeichnet, dass** die Innenstruktur (16) mindestens drei vertikale Ständer (20, 21) umfasst, die durch horizontal angeordnete Verbindungsteile (22, 24) verbunden sind.

7. Verstärkte Tür nach Anspruch 6, **dadurch gekennzeichnet, dass** die Gurte auf ihrer ganzen Länge längs der vertikalen Ständer (20, 21) und der horizontalen Verbindungsteile (22, 24) angeordnet sind.
